# EUROPEAN PATENT APPLICATION

(11) **EP 2 838 322 A1**
(43) Date of publication of application: **18.02.2015**
(21) Application number: 13180772.9
(22) Date of filing: 16.08.2013
(51) Int. Cl.: H05B 37/02

(54) **Method and apparatus for energy monitoring in lighting systems**

(71) Applicant: CP Electronics Limited, London, Greater London NW10 7XR (GB)
(72) Inventor: Mans, Paul, London NW10 7XR (GB); Milner, Merlin, London NW10 7XR (GB)
(74) Representative: Dixon, Philip Matthew

(57) **Abstract**

A method of monitoring energy usage in a lighting system controlled by at least one lighting controller 2 arranged to control a plurality of lighting devices 3. The method comprises measuring the electrical power drawn by the lighting controller 2 for distribution to the plurality of lighting devices 3. The method further comprises receiving from the lighting controller 2 information indicative of the status of each lighting device and calculating an energy usage value for each lighting device based on the measured electrical power and the status of the lighting device. The lighting system comprises at least one detector 5,6 arranged to detect a characteristic of an area illuminated by lighting devices controlled by the lighting controller 2. The method comprises an occasional calibration step of activating sequentially each of the lighting devices in the area and measuring the electrical power drawn by the lighting controller in response to the output of the detector meeting a predetermined condition. The method has the advantage that the energy consumption of individual lighting devices 3 can be determined using a single energy measurement device and the calibration step can be carried out even when the lighting devices are never all off.

## Description

This invention relates to an improved method of monitoring energy usage in a lighting system.

### BACKGROUND

Our British patent GB2452314 discloses a method of monitoring energy usage in a lighting system controlled by at least one lighting controller arranged to control a plurality of lighting devices. The method comprises measuring the electrical power drawn by the lighting controller for distribution to the plurality of lighting devices, receiving from the lighting controller information indicative of the status of each lighting device, and calculating an energy usage value for each lighting device based on the measured electrical power and the status of the lighting device. The patent further discloses an occasional calibration step of activating sequentially each of the lighting devices controlled by the lighting controller and measuring the electrical power drawn by the lighting controller. The patent suggests that the calibration step may be carried out periodically, for example at the same time every day or the calibration step may be carried out when a period of inactivity of the lighting devices has been identified, for example when all of the lights have been off for a predetermined period of time.

The present invention, at least in its preferred embodiments seeks to improve upon the method disclosed in GB2452314.

### BRIEF SUMMARY OF THE DISCLOSURE

According to the present invention, there is provided a method of monitoring energy usage in a lighting system controlled by at least one lighting controller arranged to control a plurality of lighting devices. The method comprises measuring the electrical power drawn by the lighting controller for distribution to the plurality of lighting devices, receiving from the lighting controller information indicative of the status of each lighting device, and calculating an energy usage value for each lighting device by apportioning the measured electrical power based on the status of the lighting device. The lighting system comprises at least one detector arranged to detect a characteristic of an area illuminated by lighting devices controlled by the lighting controller. The method comprises an occasional calibration step of activating sequentially each of the lighting devices in said area and measuring the electrical power drawn by the lighting controller. The calibration step is carried out in response to the output of said detector meeting a predetermined condition.

Thus, the present invention improves over that disclosed in GB2452314 in that the calibration step can be carried out even if the there is never a period of inactivity of the lighting devices. We have realised that in some situations the lighting devices may never all be off. Consequently, with the method disclosed in GB2452314, the calibration step may never be carried out. However, with the present invention, the circumstances in which the calibration step can be carried out safely are identified by the use of at least one detector, such that even if the lighting devices are on, the calibration step can be carried out.

The detector may be an existing component of the lighting system. The detector may be connected directly or indirectly to the lighting controller. Alternatively, the output of the detector may be received by a computer configured to carry out the energy usage calculation.

The detector may be an occupancy detector, for example a passive infra red detector or a microwave detector. The predetermined condition may be that the area is unoccupied. The detector may be a light level sensor and the predetermined condition may be that the light level is indicative of night time. In one embodiment, the predetermined condition is that the area is unoccupied and the light level is indicative of night time.

The calibration step may be carried out after the predetermined condition has been met for a predetermined period of time. This prevents transient operating conditions triggering the calibration step. Moreover, the calibration step may be carried out when the predetermined condition has been met during a predetermined period of time. For example, the calibration step may be scheduled to be carried out outside working hours, or during the same period each day or week. Thus, the calibration step may be scheduled periodically.

According to the method, there is no need to measure the power drawn by each individual device controlled by the system. Instead, the power drawn by the lighting controller is measured and the energy usage is calculated from the status of each lighting device. In this way, a power measuring device is only required for the lighting controller, rather than each device. Energy measurement may be taken at a lighting control module or an area controller, for example. Thus, the lighting controller may be a lighting control module or an area controller for example. At the lighting control module the resolution of the energy measurement allows readings for individual output channels. At the area controller, readings reflect the usage of energy for an individual circuit, which may be a lighting circuit or any other circuit, such as a ring main. At the lighting control module the method of measurement may be a shunt resistance because the supply can easily be broken internally and the powers are quite low. At the area controller the method of measurement may be a power clamp, allowing measurement to take place without splitting conductors.

It is possible for the power measurements to be taken at both the lighting control module and the area controller in order that the same system can measure the power consumption of other electrical circuits, such as HVAC systems, ring mains and the like.

The status of the lighting devices may include whether they are on or off. The status may also include their dimming level, where appropriate.

The invention extends to a lighting control system configured to operate in accordance with the method of the invention.

Viewed from a further aspect, the invention provides a lighting controller comprising a plurality of controllable outputs each arranged to control a respective lighting device, wherein the lighting controller further comprises an energy measurement device configured to measure the electrical power drawn by the lighting controller for distribution to the plurality of lighting devices; the lighting controller is arranged to calculate an energy usage value for each lighting device based on the measured electrical power and the status of each lighting device; the lighting controller comprises an input for signals from at least one detector arranged to detect a characteristic of an area illuminated by lighting devices controlled by the lighting controller; and the lighting controller is arranged to carry out an occasional calibration step of activating sequentially each of the lighting devices in said area and measuring the electrical power drawn by the lighting controller, in response to the output of said detector meeting a predetermined condition.

### BRIEF DESCRIPTION OF THE DRAWINGS

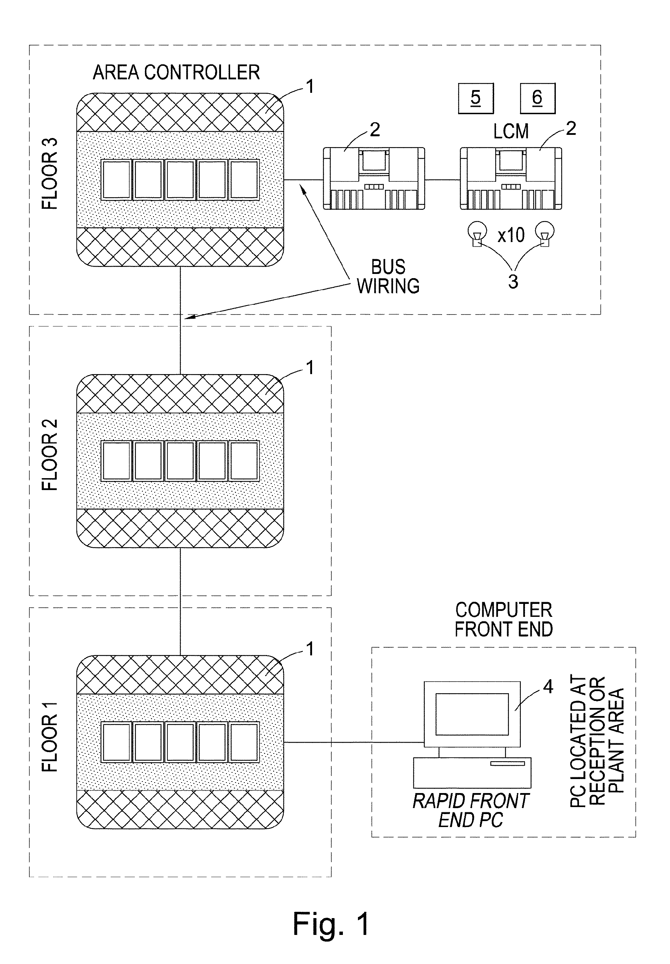

Embodiments of the invention will now be described by way of example only and with reference to the accompanying drawings, in which Figure 1 shows a lighting control system according to an embodiment of the invention.

### DETAILED DESCRIPTION

Energy measurement and monitoring is becoming an increasingly important activity in the drive to reduce energy usage in buildings. Successful energy monitoring allows consumption to be logged and energy saving plans to be introduced and measured.

Furthermore on buildings which are sub-let, energy usage measurement provides a mechanism for measuring energy charges to individual areas. As 40% of energy use in a typical office environment is lighting, this represents a major area where energy usage can be monitored. The use of lighting control systems is widespread in commercial and other premises to switch lighting and control the level of lighting. Typically these systems might comprise several multi-channel switching devices (lighting control modules or LCMs), presence detectors, light detectors, other forms of controller and a coordinator in each area, commonly called an area controller. The devices are generally connected together on some form of network to allow communication between detecting and controlling devices. A computer can also be connected, via some form of gateway, to the lighting control system to display the status of devices on the system, and also to allow the operation of the system to be modified. In some circumstances, the lighting control system can also be used for the control of blinds and HVAC (heating, ventilation and air conditioning) systems.

Figure 1 shows a lighting control system according to an embodiment of the invention.

The lighting system extends over three floors of a building, with an area controller 1 provided for each floor. The area controller 1 is shown for each of the three floors, but for reasons of clarity only the details of the remaining components of floor three are shown; the arrangement of the other two floors is similar.

As shown in Figure 1, each floor is provided with at least two lighting control modules 2, each of which is arranged to control up to ten light fittings (or luminaires) 3. The lighting control modules 2 and the area controllers 1 are connected by bus wiring which allows both power and data to be communicated between the lighting control modules 2, the area controllers 1 and a front end computer 4 provided at the reception or plant area of the building. Each floor also comprises at least one occupancy detector 5, such as a passive infra red (PIR) detector, and at least one light level sensor 6. The detectors 5, 6 can be connected directly to a lighting control module 2 or to an area controller 1 or the front end computer 4 via bus wiring or a wireless connection. Typically the detectors 5, 6 will be used to provide occupancy and light level information to the lighting control modules 2 in order to provide local control of the light fittings in response to changes in the local environment, such as the presence of a person.

The measurement of energy usage for individual output channels on the lighting control module 2 is achieved using a single measurement device, such as a shunt resistance or a power clamp. The power measurement device is incorporated into the lighting control module 2. The device measures the energy used by the entire lighting control module 2. During normal operation one or many channels of the lighting control module 2 are operational and using energy whilst the lighting control module 2 itself draws a quiescent power. The lighting control module 2 sends data to the front end computer 4 indicating which of the outputs of the lighting control module 2 is operational, the dimming level of each output and the instantaneous power drawn by the lighting control module 2.

Energy measurement software running on the front end computer 4 records the total power consumption for the lighting control module 2, together with the status of the individual outputs including, where applicable, the dimmed level of each fitting. From this information the software is able to apportion the power consumption to the individual light fittings 3 and record the energy usage of each fitting 3. In this way, the front end computer 4 can record the energy usage of each fitting 3 over time, from which an energy saving strategy for the end user can be suggested.

The energy measurement software is arranged to sense a suitable time to run a calibration routine using information from the occupancy sensors 5 and light level sensors 6. On a periodic basis calibration energy measurements are taken for the lighting control module 2 quiescent power, plus the power taken by each of the output channels at a series of discrete dimming levels (where applicable). This data is recorded and updated to reflect the differing lifetime characteristics of a luminaire 3. The front end software also allows the user to schedule the calibration measurements, if required. Using the total measured consumption when the outputs are on; the status of the outputs; and the recorded measurements during calibration, the total consumption for each luminaire 3 can be deduced with relatively high accuracy.

It is possible for the energy measurement software to run on the lighting control module 2, rather than on the front end computer 4. In this case, the consumption data, rather than the raw data, is reported via the lighting control system bus to the front end computer 4.

Furthermore there is provision to calibrate the actual energy measurement circuitry. A calibration device can be plugged into a spare channel of the lighting control module 2 or to the input of the area controller device 1. Calibration mode is entered via the front end software, via commissioning software running on a portable computer that is plugged into the lighting control module 2 or using an infrared handset. The calibration device has a known consumption dictated by a precision resistance which is used by the energy measurement software to calibrate its readings. It is also possible for the calibration device to be permanently fitted to an extra, internal channel for calibration purposes.

This invention allows a lighting control system to monitor and record the energy usage of individual light fittings or complete lighting or other electrical circuits. The results can be collated using the same computer front end as used for the lighting control system.

In summary, a method of monitoring energy usage in a lighting system controlled by at least one lighting controller 2 arranged to control a plurality of lighting devices 3. The method comprises measuring the electrical power drawn by the lighting controller 2 for distribution to the plurality of lighting devices 3. The method further comprises receiving from the lighting controller 2 information indicative of the status of each lighting device and calculating an energy usage value for each lighting device based on the measured electrical power and the status of the lighting device. The lighting system comprises at least one detector 5, 6 arranged to detect a characteristic of an area illuminated by lighting devices controlled by the lighting controller 2. The method comprises an occasional calibration step of activating sequentially each of the lighting devices in the area and measuring the electrical power drawn by the lighting controller in response to the output of the detector meeting a predetermined condition. The method has the advantage that the energy consumption of individual lighting devices 3 can be determined using a single energy measurement device and the calibration step can be carried out even when the lighting devices are never all off.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method of monitoring energy usage in a lighting system controlled by at least one lighting controller arranged to control a plurality of lighting devices, the method comprising:
measuring the electrical power drawn by the lighting controller for distribution to the plurality of lighting devices;
receiving from the lighting controller information indicative of the status of each lighting device; and
calculating an energy usage value for each lighting device by apportioning the measured electrical power based on the status of the lighting device,
wherein the lighting system comprises at least one detector arranged to detect a characteristic of an area illuminated by lighting devices controlled by the lighting controller and the method comprises an occasional calibration step of activating sequentially each of the lighting devices in said area and measuring the electrical power drawn by the lighting controller, and
wherein the calibration step is carried out in response to the output of said detector meeting a predetermined condition.

2. A method as claimed in any preceding claim, wherein the detector is an occupancy detector and the predetermined condition is that the area is unoccupied.

3. A method as claimed in any preceding claim, wherein the detector is a light level sensor and the predetermined condition is that the light level is indicative of night time.

4. A method as claimed in claim 2 and 3, wherein the predetermined condition is that the area is unoccupied and the light level is indicative of night time.

5. A method as claimed in any preceding claim, wherein the calibration step is carried out after the predetermined condition has been met for a predetermined period of time.

6. A method as claimed in any preceding claim, wherein the calibration step is carried out when the predetermined condition has been met during a predetermined period of time.

7. A lighting control system configured to operate in accordance with the method of any preceding claim.

8. A lighting controller comprising a plurality of controllable outputs each arranged to control a respective lighting device, wherein the lighting controller further comprises an energy measurement device configured to measure the electrical power drawn by the lighting controller for distribution to the plurality of lighting devices; the lighting controller is arranged to calculate an energy usage value for each lighting device based on the measured electrical power and the status of each lighting device; the lighting controller comprises an input for signals from at least one detector arranged to detect a characteristic of an area illuminated by lighting devices controlled by the lighting controller; and the lighting controller is arranged to carry out an occasional calibration step of activating sequentially each of the lighting devices in said area and measuring the electrical power drawn by the lighting controller, in response to the output of said detector meeting a predetermined condition.

9. A lighting controller as claimed in claim 8, wherein the detector is an occupancy detector and the predetermined condition is that the area is unoccupied.

10. A lighting controller as claimed in claim 8 or 9, wherein the detector is a light level sensor and the predetermined condition is that the light level is indicative of night time.

11. A lighting controller as claimed in claim 8 and 9, wherein the predetermined condition is that the area is unoccupied and the light level is indicative of night time.

12. A lighting controller as claimed in any of claims 8 to 11, wherein the lighting controller is arranged to carry out the calibration step after the predetermined condition has been met for a predetermined period of time.

13. A lighting controller as claimed in any of claims 8 to 12, wherein the lighting controller is arranged to carry out the calibration step when the predetermined condition has been met during a predetermined period of time.
